# EUROPEAN PATENT APPLICATION

(11) **EP 3 321 879 A1**
(43) Date of publication of application: **16.05.2018**
(21) Application number: 16850210.2
(22) Date of filing: 17.08.2016
(51) Int. Cl.: G06Q 50/28, G01N 23/00

(54) **ARTICLE INSPECTION AND EXAMINATION SYSTEM AND METHOD**

(30) Priority: 28.09.2015 CN 201510629286
(71) Applicant: Nuctech Company Limited, TongFang Building, Shuangqinglu, Haidian District Beijing 100084 (CN)
(72) Inventor: WANG, Ruibo, Beijing 100084 (CN); ZENG, Lei, Beijing 100084 (CN); WANG, Qiang, Beijing 100084 (CN)
(74) Representative: Cabinet Beau de Loménie
(86) International application number: PCT/CN2016/095678
(87) International publication number: WO 2017/054586

(57) **Abstract**

An article inspection and examination system and method. The article inspection and examination system comprises: an information bus service system (3100), the information bus service system (3100) comprising an interface service module (3112) for externally providing a standard interface (3107) such that a plurality of clients interact with the information bus service system (3100) through the standard interface (3107); a flow management module (3108) for managing an object subjected to examination according to data from the standard interface (3107), the object subjected to examination corresponding to a scanning image in an article inspection and examination process; a database (3310) coupled to the information bus service system (3100) for storing article inspection and examination information; and an image file library (3320) coupled to the information bus service system (3100) for storing an article scanning image file.

## Description

### TECHNICAL FIELD

The present disclosure relates to an article inspection and examination system and method, and more particularly to an article inspection and examination system and method of an information bus service system.

### BACKGROUND

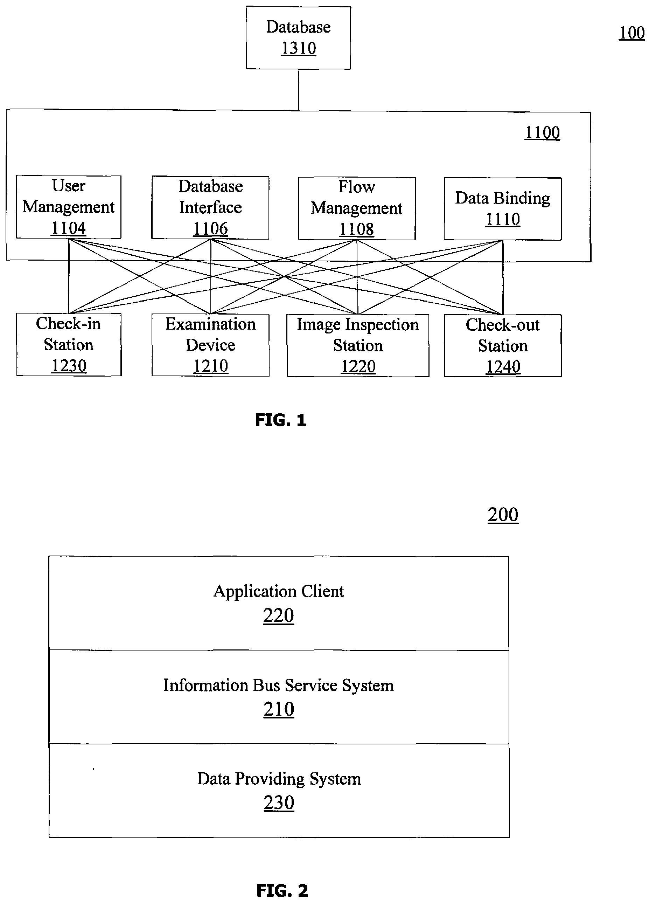

Existing safety inspection and examination systems used for goods supported or carried by vehicles such as containers, freight vehicles, passenger vehicles and the like are slightly different in terms of different devices and functional needs. However, for main parts of the systems, the basic structure is approximately as shown in FIG. 1.

Referring to FIG. 1, an article inspection and examination system 100 includes a server system 1100. As used in this application, the term "articles" may be understood in a broad sense, including, but not limited to: goods supported or carried by vehicles such as containers, freight vehicles, passenger vehicles and the like, the vehicles themselves, or other articles. The server system 1100 includes a plurality of service subsystems such as a user management subsystem 1104, a database interface 1106, a flow management subsystem 1108, a data binding module 1110 and so on. These subsystems perform their own functions. Each service provided by these subsystems corresponds to a client dynamic link library, and is invoked by various types of client programs. Each service program may run a web service, and is invoked by a corresponding dynamic link library. The client may include a check-in station 1230, an examination device 1210, an image inspection station 1220, a check-out station 1240 and so on. When in need, each client may interact with a database system 1310 via the database interface 1106.

In such a system structure, a complex invoking relation is formed between the clients and the servers, and a greater challenge is also posed to version maintenance of a dynamic link library (DLL) and application programs. In addition, each service process runs independently and separately. Therefore, data communication among the clients is troublesome. In such a case, when the system is changed functionally, for example, when sequences of examination processes are adjusted, examination links are increased, the functions of the examination device are upgraded and the like, many adjustments in terms of services and clients may be involved. It is difficult to implement a set of system in coordination with multiple sets of scanning devices because the system is bound to the scanning device.

A design principle of a traditional microcomputer system bus is as below: a computer connects a CPU, a memory and various peripherals together via a system bus, so that all components are integrated into an interactive whole body. Each component transmits data and control instructions using the same interface, and most of the peripherals support random plugging. However, it is apparent that such a system is used for constructing a hardware system and is impossibly applied to an article inspection system. On the other hand, an enterprise system bus (ESB) is mainly applied to enterprise-class or group-class office automation (OA) or enterprise resource planning (ERP) and the like so as to implement information integration of enterprises. Apparently, the ESB is also unfit for a specific business process function and is less likely to be used for constructing a business logic including a device and an application.

Therefore, in order to better fuse information between each device and a workstation in the process of article nondestructive inspection, an improved article inspection and examination system is required to support the concrete examination business logic.

The above-mentioned information disclosed in this Background section is only for the purpose of enhancing the understanding of background of the present disclosure and may therefore include information that does not constitute a prior art that is known to those of ordinary skill in the art.

### SUMMARY

This application discloses an article inspection and examination system and method based on an information bus service system, which can implement flexible configuration of the system.

Other features and advantages of the present disclosure will become apparent from the following detailed description, or in part, by practice of the present disclosure.

According to an aspect of the present disclosure, there is provided an article inspection and examination system, including: an information bus service system, the information bus service system including an interface service module, configured to outwards provide a standard interface such that a plurality of clients interact with the information bus service system through the standard interface; a flow management module, configured to manage an object subjected to examination according to data from the standard interface, the object subjected to examination corresponding to an article inspection and examination process; a device database, coupled to the information bus service system and configured to store article inspection and examination information; and an image file library, coupled to the information bus service system and configured to store an article scanning image file.

According to some embodiments, the flow management module is configured to manage the object subjected to examination according to the data from the standard interface, including binding an identifier as an attribute of the object subjected to examination, set up a status of the object subjected to examination, bind data, and/or cancel the object subjected to examination.

According to some embodiments, a data transmission protocol for the standard interface includes one or more of socket, http get/post, web services, and message queue.

According to some embodiments, the interface service module is configured to determine, according to data from the standard interface, a processing method corresponding to the data and a returned content.

According to some embodiments, the plurality of clients includes an examination device and an image inspection station or one or more of the examination device, the image inspection station, a check-in station, a check-out station, and an EDI information interface.

According to some embodiments, the article inspection and examination system further includes a user management module, configured to manage an operator to log onto the article inspection and examination system and manage various operations of the operator. The user management module is coupled to the information bus service system or is included in the information bus service system. After the operator successfully logs onto the article inspection and examination system via one of the plurality of clients, the information bus service system returns a login result and/or a login bill to a corresponding client via the standard interface.

According to some embodiments, the information bus service system further includes a flow configuration tool, configured to set up or adjust a position and/or a function of the plurality of clients in the article inspection and examination process.

According to some embodiments, the information bus service system further includes a data binding module, configured to bind additional inspection-related data to the object subjected to examination.

According to some embodiments, the information bus service system further includes an information routing module, configured to forward data among different clients.

According to some embodiments, the image inspection station is configured to invoke the standard interface of the information bus service system to poll an image inspection task, receive the object subjected to examination returned by the information bus service system and download a corresponding article scanning image file so that an operator discriminates an image, and upload image inspection information via the standard interface to store the image inspection information in the device database.

According to some embodiments, the examination device is configured to upload the article scanning image file generated after an article scanning to the image file library.

According to some embodiments, the flow management module is configured to create the object subjected to examination before or after the examination device runs.

According to another aspect of the present disclosure, there is provided a method for article inspection and examination, including: acquiring an article scanning image file from an examination device and storing the article scanning image file in an image file library; creating an object subjected to examination; returning an image inspection task polling result via a standard interface, returning the object subjected to examination to an eligible image inspection station, and changing a status of the object subjected to examination to on-going image inspection; providing downloading of the article scanning image file; receiving image inspection information from the image inspection station via the standard interface and storing the image inspection information in the device database; and setting the status of the object subjected to examination as image inspection accomplished, or setting the status of the object subjected to examination as to be examined.

According to some embodiments, acquiring an article scanning image file from an examination device and storing the article scanning image file in an image file library are executed before creating an object subjected to examination.

According to some embodiments, after acquiring an article scanning image file from an examination device, the method further includes receiving, from the standard interface, data including an identifier from the examination device, and after creating an object subjected to examination, the method further includes changing the status of the object subjected to examination to ready for image inspection, and binding the identifier as an attribute of the object subjected to examination.

According to some embodiments, acquiring an article scanning image file from an examination device and storing the article scanning image file in an image file library are executed after creating an object subjected to examination, and after acquiring the article scanning image file from the examination device, the status of the object subjected to examination is set as ready for image inspection.

According to some embodiments, before creating an object subjected to examination, the method further includes receiving, from the standard interface, check-in information including an identifier from a check-in station, and after creating an object subjected to examination, the method further includes changing the status of the object subjected to examination to ready for scanning, and binding the identifier as an attribute of the object subjected to examination.

According to some embodiments, the identifier is a serial number.

According to some embodiments, before acquiring an article scanning image file from an examination device, the method further includes: providing a list of objects subjected to examination including the object subjected to examination for the examination device via the standard interface, so that an operator selects an object subjected to examination corresponding to an arrived article.

According to some embodiments, after setting the status of the object subjected to examination as to be examined, the method further includes: returning an examination task polling result via the standard interface, returning the object subjected to examination to an eligible check-out station, and changing the status of the object subjected to examination to on-going examination; providing downloading of the article scanning image file; receiving examination information from the check-out station via the standard interface and storing the examination information in the device database; and setting the status of the object subjected to examination as examination accomplished.

The article inspection and examination system based on the information bus service system according to some embodiments of the present disclosure provides a unified platform for managing each subsystem of the article inspection and examination system. The same access mode is adopted for the examination device, a third-party device and a workstation. Therefore, flexible configuration and rapid adjustment of the system may be implemented.

### BRIEF DESCRIPTION OF THE DRAWINGS

The above and other features and advantages of the present disclosure will become more apparent by describing in detail illustrative embodiments thereof, with reference to the accompanying drawings.
FIG. 1 schematically illustrates an architecture of an existing article inspection and examination system;
FIG. 2 schematically illustrates a layered architecture of an article inspection and examination system according to some embodiments of the present disclosure;
FIG. 3 schematically illustrates a specific composition of an article inspection and examination system according to some embodiments of the present disclosure;
FIG. 4 illustrates a flowchart for article inspection and examination according to some embodiments of the present disclosure; and
FIG. 5 illustrates a flowchart for article inspection and examination according to some other embodiments of the present disclosure.

### DETAILED DESCRIPTION

Illustrative embodiments will now be described more fully with reference to the accompanying drawings. However, the illustrative embodiments can be implemented in a variety of forms and should not be construed as limited to the embodiments set forth herein. Rather, the embodiments are provided so that this disclosure will be thorough and complete and will fully convey the concepts of the illustrative embodiments to those skilled in the art. The same reference numerals in the drawings denote the same or similar parts, and thus repeated description thereof will be omitted.

In addition, the features, structures, or characteristics described may be combined in one or more embodiments in any suitable manner. In the following description, numerous specific details are provided to give a full understanding of the embodiments of the present disclosure. However, those skilled in the art will appreciate that one or more of the specific details may be practiced without practicing the technical solutions of the present disclosure, and other methods, components, materials, devices, steps, and the like may be employed. In other instances, well-known structures, methods, devices, implementations, materials, or operations are not shown or described in detail to avoid obscuring aspects of the present disclosure.

The block diagrams illustrated in the drawings are merely functional entities and do not necessarily correspond to any physically separate entity. In other words, these functional entities may be implemented in software form, or implemented in one or more hardware modules or integrated circuits, or implemented in different networks and/or processor devices and/or microcontroller devices.

The flowcharts as shown in the accompanying drawings are merely illustrative description instead of necessarily including all the steps. For example, some steps may be broken down, while some steps may be combined or partly combined. Therefore, the actual execution sequences may be changed according to the actual conditions.

FIG. 2 schematically illustrates a layered architecture of an article inspection and examination system according to some embodiments of the present disclosure.

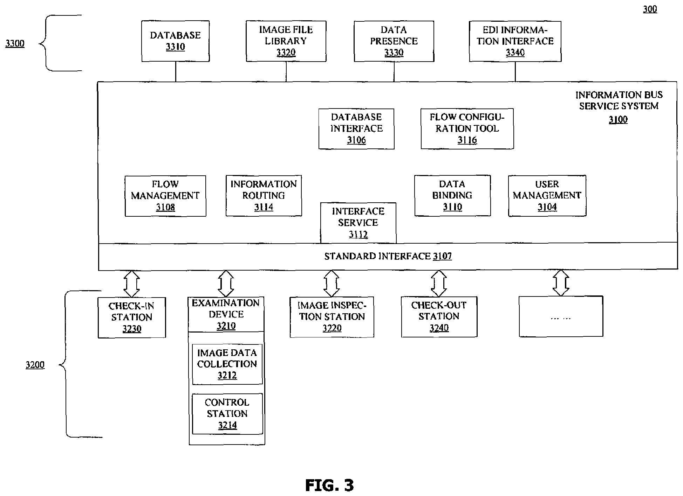

As shown in FIG. 2, a core layer of the article inspection and examination system 200 is an information bus service system 210, which separates an application layer from a data layer. The application layer may include a plurality of application clients 220. The data layer may include a plurality of data providing systems 230. The service may be based on a traditional application service, and a standard interface may be provided outwards. Because of providing a standard interface outwards, such an architecture may eliminate technological differences among different application clients 220, so that different applications may operate in coordination to implement communication and integration of different services. FIG. 3 schematically illustrates a specific composition of an article inspection and examination system according to some embodiments of the present disclosure.

As shown in FIG. 3, an article inspection and examination system 300 according to some embodiments of the present disclosure may include an information bus service system 3100, a plurality of application clients 3200, and a plurality of data providing systems 3300.

The specific composition of the client 3200 may depend on actual demands, for example, including, but not limited to, an examination device 3210 and an image inspection station 3220. The examination device 3210 may include an image data collecting system 3212 and a control station 3214.

In some applications, the application client 3200 may further include, for example, a check-in station 3230, a check-out station 3240 and so on, but the present disclosure is not limited thereto.

The plurality of data providing systems 3300 may include, for example, a device database 3310 and an image file library 3320. However, the present disclosure is not limited thereto. For example, in some applications, also an EDI information interface may exist to provide EDI data. The device database 3310 may be configured to store article inspection and examination information. The image file library 3320 may be configured to store an article scanning image file. The device database 3310 and the image file library 3320 may be implemented in a variety of ways. Not only existing commercial standard databases may be used, but also customized databases or file systems may be used. For example, the device database 3310 may adopt a commercial standard database such as an Oracle database, and the image file library 3320 may adopt a file system. According to the actual situation, the device database 3310 and the image file library 3320 also may adopt the same database system. The technical solution of the present disclosure has no limitation on the device database 3310 and the image file library 3320.

The information bus service system 3100 may include, but is not limited to, an interface service module 3112 and a flow management module 3108.

The interface service module 3112 may outwards provide a standard interface 3107. A plurality of clients 3200 interact with the information bus service system 3100 via the standard interface 3107. Data transmission protocols used in the standard interface 3107 may include one or more of socket, http, web services and message queue. However, the present disclosure is not limited thereto, and other transmission protocols may also be used.

The interface service module 3112 may determine, according to data from the standard interface, a processing method corresponding to the data and a returned content. For example, corresponding object subjected to examination and relevant information may be returned if the current on-going image inspection task is determined according to the data from the standard interface.

The flow management module 3108 may manage the object subjected to examination according to the data from the standard interface. The object subjected to examination may correspond to an article inspection and examination process, including, but not limited to: check-in/precheck-in, image scanning, image inspection, and check-out, etc. The flow management module may create the object subjected to examination before the examination device 3210 performs a node task. That is, the object subjected to examination is created before a scan detection is performed. Alternatively, the flow management module may create the object subjected to examination after the examination device 3210 performs a node task. That is, a scan detection is performed to obtain a scanning image file before the object subjected to examination is created. The object subjected to examination may be one or more records in the database, or object instances related to these records and so on. However, the present disclosure is not limited thereto.

The flow management module 3108 manages the object subjected to examination, which may include, but is not limited to: binding an identifier (for example, a serial number) as an attribute of the object subjected to examination; setting up a status of the object subjected to examination according to data circulating and/or event triggering; binding data; and canceling the object subjected to examination, etc.

The information bus service system 3100 may be coupled to the device database 3310 and the image file library 3320 via, for example, a database interface 3106.

The article inspection and examination system 300 may further include a user management module 3104, which is configured to manage an operator to log onto the article inspection and examination system and manage various operations of the operator. The user management module 3104 may be coupled to the information bus service system 3100 or included in the information bus service system 3100, which is not limited by the present disclosure. After the operator successfully logs onto the article inspection and examination system 300 via one of the plurality of clients, the information bus service system 3100 may return a login result and/or a login bill to a corresponding client via the standard interface 3107. However, the present disclosure is not limited thereto.

The information bus service system 3100 may further include a flow configuration tool, which is configured to set up or adjust a position and/or a function of the plurality of clients in the article inspection and examination process, including, but not limited to: inspecting and examining settings of nodes and settings of sequential relationship among the nodes, examining a predefinition of a status of an object and functional upgrade changes or increasing/decreasing examination links, etc.

The information bus service system 3100 may further include a data binding module 3110, which is configured to bind additional inspection-related data to the object subjected to examination. For example, when a quick inspection system exists, the data binding module 3110 may automatically bind inspection data of the quick inspection system to the object subjected to examination.

The information bus service system 3100 may further include an information routing module, which is configured to forward data among different clients.

According to some embodiments, the image inspection station 3220 may be configured to: invoke the standard interface 3107 of the information bus service system 3100 to poll an image inspection task, receive the object subjected to examination returned by the information bus service system 3100 and download a corresponding article scanning image file so that an operator and/or a machine intelligently discriminates an image, and upload image inspection information via the standard interface 3107 to store the image inspection information in the device database 3310 after discriminating the image.

According to some embodiments, the examination device 3210 may be configured to upload the article scanning image file generated after an article scanning to the image file library 3320.

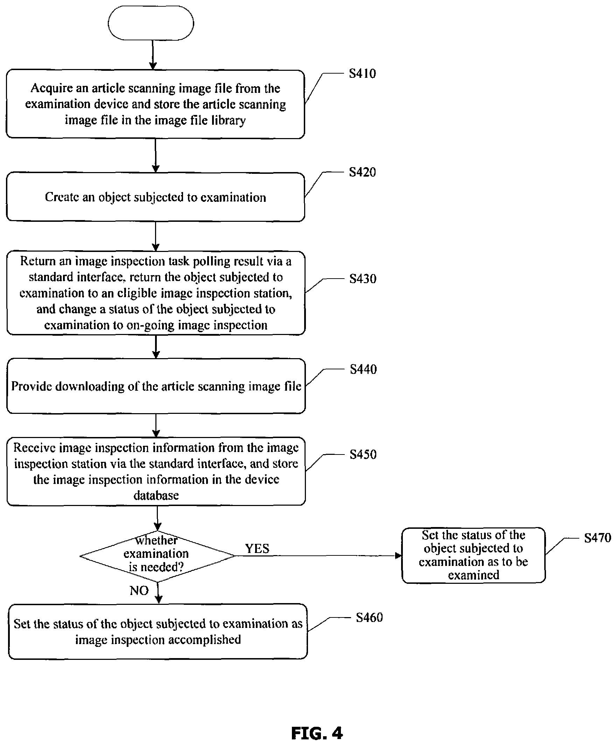

FIG. 4 illustrates a flowchart for article inspection and examination according to some embodiments of the present disclosure.

As shown in FIG. 4, in S410, the information bus service system may acquire an article scanning image file from the examination device and store the article scanning image file in the image file library.

According to some embodiments, after acquiring the article scanning image file, the data (for example, a serial number) from the examination device may be received from the standard interface.

In S420, an object subjected to examination is created.

According to some embodiments, after the object subjected to examination is created, the status of the object subjected to examination is changed to ready for image inspection, and the serial number may be bound, as an attribute, to the object subjected to examination.

In S430, an image inspection task polling result is returned via a standard interface, the object subjected to examination is returned to an eligible image inspection station, and a status of the object subjected to examination is changed to on-going image inspection.

In S440, downloading of the article scanning image file is provided.

In S450, image inspection information from the image inspection station is received via the standard interface and the image inspection information is stored in the device database.

It is determined whether an examined node exists according to the article inspection and examination process. If no examined node exists, the status of the object subjected to examination is set as image inspection accomplished in S460. If the examined node exists, the status of the object subjected to examination is set as to be examined in S470.

If the status of the object subjected to examination is set as to be examined, an examination task polling result is returned via the standard interface, the object subjected to examination is returned to an eligible check-out station, and the status of the object subjected to examination is changed to on-going examination. Next, downloading of the article scanning image file may be provided according to an operation of the client. Next, examination information from the check-out station is received via the standard interface and the examination information is stored in the device database. Finally, the status of the object subjected to examination is set as examination accomplished.

According to some embodiments, before a predetermined operation, it is also required to receive login information of an operator and return a login result and/or a login bill.

According to some embodiments, in addition to scanning an image for image inspection, the method according to the present disclosure may further include binding additional inspection-related data from, for example, a quick inspection system, to the object subjected to examination. Those skilled in the art may easily implement the present disclosure according to existing binding methods and teaching of the present disclosure, which is not unnecessarily described any more.

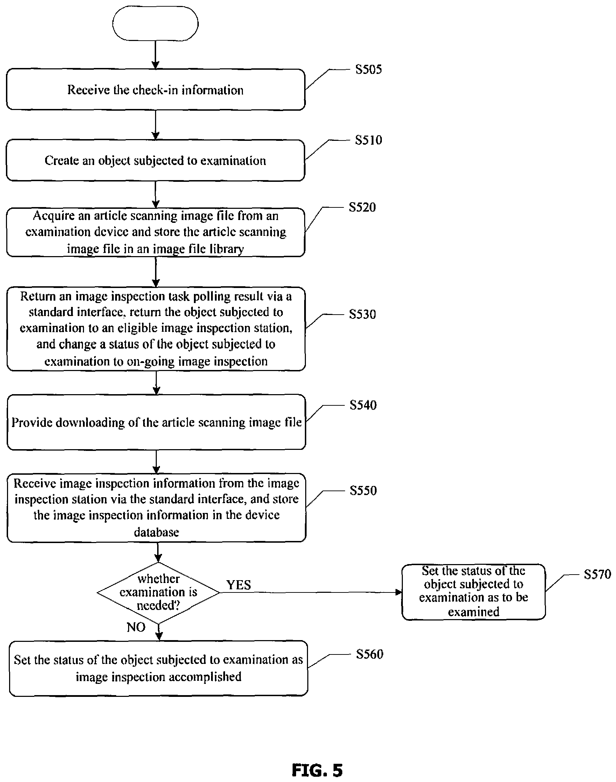

FIG. 5 illustrates a flowchart for article inspection and examination according to some other embodiments of the present disclosure. The flows as shown in FIG. 5 are basically identical to those in FIG. 4, the difference only resides in that in the flows as shown in FIG. 5, creating an object subjected to examination is executed before the acquiring a scanning image file, and this flow includes a check-in operation.

As shown in FIG. 5, in Step 505, the information bus service system may receive the check-in information. Specifically, for example, the information bus service system may receive the check-in information from the check-in station via the standard interface, wherein the check-in information may include a serial number.

In S510, an object subjected to examination is created.

According to some embodiments, after the object subjected to examination is created, the status of the object subjected to examination is changed to ready for scanning, and the serial number may be bound, as an attribute, to the object subjected to examination.

In S520, the information bus service system may acquire an article scanning image file from an examination device and store the article scanning image file in an image file library.

According to some embodiments, before acquiring the article scanning image file from the examination device, a list of objects subjected to examination including the object subjected to examination may also be provided for the examination device via the standard interface, so that an operator selects an object subjected to examination corresponding to an arrived article.

In S530, an image inspection task polling result is returned via a standard interface, the object subjected to examination is returned to an eligible image inspection station, and the status of the object subjected to examination is changed to on-going image inspection.

In S540, downloading of the article scanning image file is provided.

In S550, image inspection information from the image inspection station is received via the standard interface, and the image inspection information is stored in the device database.

It is determined whether an examined node exists according to the article inspection and examination process. If no examined node exists, the status of the object subjected to examination is set as image inspection accomplished in S560. If the examined node exists, the status of the object subjected to examination is set as to be examined in S570.

If the status of the object subjected to examination is set as to be examined, an examination task polling result is returned via the standard interface, the object subjected to examination is returned to an eligible check-out station, and the status of the object subjected to examination is changed to on-going examination. Next, downloading of the article scanning image file may be provided according to an operation of the client. Next, examination information from the check-out station is received via the standard interface and the examination information is stored in the device database. Finally, the status of the object subjected to examination is set as examination accomplished.

A complete examination process is described below taking the inspection and examination system including an examination device (containing corresponding control and collecting modules) and an image inspection station as an example.
a) After a vehicle scanning is accomplished, the collecting module uploads a generated article scanning image file to a server temporary directory using File Transfer Protocol (FTP), and then invokes the standard interface of the information bus service system to inform a serial number.
b) The information bus service system creates an object subjected to examination, sets the status thereof as ready for image inspection, and binds the serial number, as an attribute, to the object.
c) A user logs into an image inspection station: the image inspection station sends a username, a password and a workstation number to the information bus service system. The system returns a login result after checking the information with user information stored in the database. A character string of bill information may also be simultaneously returned in case of a successful login, but the present disclosure is not limited thereto.
d) The image inspection station invokes the standard interface of the information bus service system to poll an image inspection task. The system returns the generated object subjected to examination to the eligible image inspection station and also changes the status thereof as on-going image inspection. The image inspection station downloads a corresponding scanning image file according to the returned information, and opens the scanning image file so that an operator of the image inspection station can discriminate the image and/or a machine can intelligently discriminate the image.
e) After the operator of the image inspection station submits an image discrimination conclusion, the image inspection station invokes the standard interface of the information bus service system to upload a login bill, the conclusion and a description. The information bus service system obtains information related to the operator according to the bill information, then writes data related to the operation into the database, and finally invokes the flow management module to push the status of the object subjected to examination to image inspection accomplished. In this way, a most basic examination process may be accomplished.

A complete examination process is described below by taking an examination system including an examination device (containing corresponding control and collecting modules), an image inspection station, a check-in station and a check-out station as an example. This process is somewhat different from the previous process, but has a consistent basic principle compared with the previous process, i.e., based on the system and the method according to the present disclosure.
a) The operator logs onto the check-in station: the check-in station sends a username, a password and a workstation number to the information bus service system. The system returns a login result after checking the information with user information stored in the database. A character string of bill information (all clients requiring the operator to log onto may have the same process when running, which is not repeated hereinafter) may also be simultaneously returned in case of a successful login, but the present disclosure is not limited thereto.
b) The operator of the check-in station clicks a submit button after entering to-be-inspected information and a scanning file of related paper (which may be omitted under some sampling EDI conditions) into the check-in station, the check-in station uploads file data to the server temporary directory through FTP, then converts the check-in information to an XMI format according to an appointed format and invokes the standard interface to upload the check-in information and the bill information to a service platform. The check-in information may include a serial number.
c) The information bus service system creates an object subjected to examination, sets the status thereof as ready for scanning, and binds the serial number, as an attribute, to the object.
d) A control station of the examination device invokes the standard interface to acquire a list of objects to be scanned.
e) When the vehicle arrives on a side of the device, the operator of the control station selects a corresponding object subjected to examination and controls the device to scan. The information bus service system sets the status of the corresponding object subjected to examination as on-going scanning.
f) After the scanning is accomplished, the control station submits the object subjected to examination to the information bus service system and uploads a scanning image file through FTP. The information bus service system sets the status of the corresponding object subjected to examination as ready for image inspection.
g) The image inspection station invokes the standard interface of the information bus service system to poll an image inspection task. The system returns the generated object subjected to examination to the eligible image inspection station and also changes the status thereof as on-going image inspection. The image inspection station downloads a corresponding scanning image file according to the returned information, and opens the scanning image file so that the operator of the image inspection station can discriminate the image and/or a machine can intelligently discriminate the image, and the check-in information also may be displayed at the same time.
h) After the operator of the image inspection station or the machine submits an image discrimination conclusion after intelligent image discrimination, the image inspection station invokes the standard interface of the information bus service system to upload the login bill, the conclusion and a description. The information bus service system obtains information related to the operator according to the bill information, then writes data related to the operation into the database, and finally invokes the flow management module to push the status of the object subjected to examination as to be examined.
i) A check-out station invokes the standard interface of the information bus service system to poll a check-out task. The system returns the generated object subjected to examination to an eligible check-out station and changes the status thereof to on-going examination. The check-out station downloads a corresponding scanning image file according to the returned information, and opens the scanning image file so that the operator of the check-out station can examine, and meanwhile check-in and image inspection conclusion information may be displayed.
j) After the operator of the check-out station submits a check-out conclusion, the check-out station invokes the standard interface of the information bus service system to upload a login bill, the conclusion and a description. The information bus service system obtains information related to the operator according to the bill information, then writes data related to the operation into the database, and finally invokes the flow management module to push the status of the object subjected to examination to examination accomplished. In this way, an examination process may be accomplished.

Through the above detailed description, those skilled in the art readily understand that the system and method according the embodiments of the present disclosure have one or more of the following advantages.

The article inspection and examination system based on the information bus service system according to some embodiments of the present disclosure provides a unified platform for managing each subsystem of the article inspection and examination system. The same access mode is adopted for the examination device, a third-party device and a workstation. Therefore, flexible configuration and rapid adjustment of the system may be implemented.

With description of the above embodiments, it will be readily understood by those skilled in the art that the embodiments of the present disclosure may be implemented by hardware or by means of software in combination with the necessary hardware. Thus, the technical solution according to the embodiments of the present disclosure may be embodied in the form of a software product which may be stored on a nonvolatile storage medium (which may be CD-ROM, flash memory, mobile hard disk and the like), including a number of instructions for enabling a computing device (which may be a personal computer, a server, a mobile terminal, or a network device and the like) to perform the method according to the embodiments of the present disclosure.

It will be understood by those skilled in the art that the drawings are merely schematic diagrams of illustrative embodiments and that the modules or processes in the drawings are not indispensably necessary to implement the present disclosure and are therefore not intended to limit the scope of protection of the present disclosure.

It will be understood by those skilled in the art that the above-described modules may be distributed in the apparatus as described in the embodiments, or may be modified in one or more devices different from the present embodiment. The modules of the above-described embodiments may be combined into one module or may be further divided into a plurality of submodules.

Illustrative embodiments of the present disclosure are particularly shown and described as above. It is to be understood that the present disclosure is not limited to the disclosed embodiments, but rather that the present disclosure is intended to cover various modifications and equivalent arrangements included within the spirit and scope of the appended claims.

## Claims

1. An article inspection and examination system, **characterized in** comprising:
an information bus service system, the information bus service system comprising:
an interface service module, configured to outwards provide a standard interface such that a plurality of clients interact with the information bus service system through the standard interface, and
a flow management module, configured to manage an object subjected to examination according to data from the standard interface, the object subjected to examination corresponding to an article inspection and examination process;
a device database, coupled to the information bus service system and configured to store article inspection and examination information; and
an image file library, coupled to the information bus service system and configured to store an article scanning image file.

2. The article inspection and examination system according to claim 1, wherein the flow management module is configured to manage the object subjected to examination according to the data from the standard interface, comprising binding an identifier as an attribute of the object subjected to examination, set up a status of the object subjected to examination, bind data, and/or cancel the object subjected to examination.

3. The article inspection and examination system according to claim 1, wherein a data transmission protocol for the standard interface comprises one or more of socket, http get/post, web services, and message queue.

4. The article inspection and examination system according to claim 1, wherein the interface service module is configured to determine, according to data from the standard interface, a processing method corresponding to the data and a returned content.

5. The article inspection and examination system according to claim 1, wherein the plurality of clients comprises an examination device and an image inspection station or one or more of the examination device, the image inspection station, a check-in station, a check-out station, and an EDI information interface.

6. The article inspection and examination system according to claim 1, further comprising a user management module, configured to manage an operator to log onto the article inspection and examination system and manage various operations of the operator, the user management module being coupled to the information bus service system or being comprised in the information bus service system, wherein after the operator successfully logs onto the article inspection and examination system via one of the plurality of clients, the information bus service system returns a login result and/or a login bill to a corresponding client via the standard interface.

7. The article inspection and examination system according to claim 1, wherein the information bus service system further comprises a flow configuration tool, configured to set up or adjust a position and/or a function of the plurality of clients in the article inspection and examination process.

8. The article inspection and examination system according to claim 1, wherein the information bus service system further comprises a data binding module, configured to bind additional inspection-related data to the object subjected to examination.

9. The article inspection and examination system according to claim 1, wherein the information bus service system further comprises an information routing module, configured to forward data among different clients.

10. The article inspection and examination system according to claim 5, wherein the image inspection station is configured to invoke the standard interface of the information bus service system to poll an image inspection task, receive the object subjected to examination returned by the information bus service system and download a corresponding article scanning image file so that an operator discriminates an image, and upload image inspection information via the standard interface to store the image inspection information in the device database.

11. The article inspection and examination system according to claim 5, wherein the examination device is configured to upload the article scanning image file generated after an article scanning to the image file library.

12. The article inspection and examination system according to claim 5, wherein the flow management module is configured to create the object subjected to examination before or after the examination device runs.

13. A method for article inspection and examination, comprising:
acquiring an article scanning image file from an examination device and storing the article scanning image file in an image file library;
creating an object subjected to examination;
returning an image inspection task polling result via a standard interface, returning the object subjected to examination to an eligible image inspection station, and changing a status of the object subjected to examination to on-going image inspection;
providing downloading of the article scanning image file;
receiving image inspection information from the image inspection station via the standard interface and storing the image inspection information in the device database; and
setting the status of the object subjected to examination as image inspection accomplished, or setting the status of the object subjected to examination as to be examined.

14. The method according to claim 13, wherein acquiring an article scanning image file from an examination device and storing the article scanning image file in an image file library are executed before creating an object subjected to examination.

15. The method according to claim 14, wherein after acquiring an article scanning image file from an examination device, the method further comprises receiving, from the standard interface, data comprising an identifier from the examination device, and after creating an object subjected to examination, the method further comprises changing the status of the object subjected to examination to ready for image inspection, and binding the identifier as an attribute of the object subjected to examination.

16. The method according to claim 13, wherein acquiring an article scanning image file from an examination device and storing the article scanning image file in an image file library are executed after creating an object subjected to examination, and after acquiring the article scanning image file from the examination device, the status of the object subjected to examination is set as ready for image inspection.

17. The method according to claim 16, wherein before creating an object subjected to examination, the method further comprises receiving, from the standard interface, check-in information comprising an identifier from a check-in station, and after creating an object subjected to examination, the method further comprises changing the status of the object subjected to examination to ready for scanning, and binding the identifier as an attribute of the object subjected to examination.

18. The method according to claim 15 or 17, wherein the identifier is a serial number.

19. The method according to claim 13, wherein before acquiring an article scanning image file from an examination device, the method further comprises: providing a list of objects subjected to examination comprising the object subjected to examination for the examination device via the standard interface, so that an operator selects an object subjected to examination corresponding to an arrived article.

20. The method according to claim 13, wherein after setting the status of the object subjected to examination as to be examined, the method further comprises:
returning an examination task polling result via the standard interface, returning the object subjected to examination to an eligible check-out station, and changing the status of the object subjected to examination to on-going examination;
providing downloading of the article scanning image file;
receiving examination information from the check-out station via the standard interface and storing the examination information in the device database; and
setting the status of the object subjected to examination as examination accomplished.
